# EUROPEAN PATENT APPLICATION

(11) **EP 4 694 052 A1**
(43) Date of publication of application: **11.02.2026**
(21) Application number: 23935179.4
(22) Date of filing: 27.12.2023
(51) Int. Cl.: H04L 41/0659

(54) **SPN SYSTEM AND PROTECTION SWITCHING METHOD BASED ON SPN SYSTEM**

(30) Priority: 25.04.2023 CN 202310477058
(71) Applicant: ZTE CORPORATION, Shenzhen, Guangdong 518057 (CN)
(72) Inventor: CHEN, Jie, Shenzhen, Guangdong 518057 (CN); WANG, Qiang, Shenzhen, Guangdong 518057 (CN); ZHOU, Huadong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/142293
(87) International publication number: WO 2024/222013

(57) **Abstract**

Disclosed in the present application are an SPN system and a protection switching method based on the SPN system. The system comprises a dual-node interconnection (DNI) master node and a DNI standby node which are used for carrying out DNI with a peer SPN system, wherein the DNI master node comprises a first DNI channel sub-port used for establishing a DNI channel with the DNI standby node, and the DNI standby node comprises a second DNI channel sub-port used for establishing the DNI channel with the DNI master node.

## Description

### CROSS-REFERENCE TO RELATED APPLICATIONS

The present application claims priority to the Chinese patent application No. 202310477058.4 filed on April 25, 2023 to the China Patent Office, and entitled "SPN SYSTEM AND PROTECTION SWITCHING METHOD BASED ON SPN SYSTEM", of which the entire contents are incorporated herein by reference.

### TECHNICAL FIELD

Embodiments of the present application relate to the technical field of communications, in particular to a slicing packet network (SPN) system and a protection switching method based on the SPN system.

### BACKGROUND

In a slicing packet network (SPN), a fine granularity unit (FGU) can be integrated into an overall architecture of the SPN through hierarchical design. The FGU performs further time slot division and multiplexing on 5Gbps particles in an SPN channel layer to form an end-to-end fine granularity hard pipeline with a bandwidth granularity of 10 Mbps, so as to carry services with the carrying requirements of small bandwidth, hard isolation, and high security. The SPN after FGU fusion includes a slicing packet layer (SPL), a slicing channel layer (SCL), and a slicing transfer layer (STL). The SCL provides an end-to-end fine granularity channel (FG Channel) at the rate of n*10 Mbps and an end-to-end metro transport network path channel (MTNP Channel) at the rate of n*5 Gbps.

Some of private line services carried by the two channels mentioned above have scenarios of crossing SPN metros and SPN provincial backbones. Traditionally, user-network interface (UNI) interconnection is used between SPN metro networks or between SPN metros and SPN provincial backbones to facilitate respective operation and maintenance management and interconnection configuration. However, for cross-domain private line services, if UNI interconnection is used between domains, cross-domain end-to-end FG channels cannot be provided, which cannot meet the requirements of hard isolation of the services.

### SUMMARY

Embodiments of the present application provide an SPN system and a protection switching method based on the SPN system.

In order to solve the above technical problems, the present application is implemented as follows.

In a first aspect, provided is a slicing packet network (SPN) system. The system includes: a dual node interconnection (DNI) master node and a DNI standby node which are used for carrying out DNI with a peer SPN system, wherein the DNI master node includes a first DNI channel sub-port, configured to establish a DNI channel with the DNI standby node, and the DNI standby node includes a second DNI channel sub-port, configured to establish the DNI channel with the DNI master node.

In a second aspect, provided is a protection switching method based on an SPN system, applied to a PE node in the SPN system above. The method includes: receiving, by the PE node, a service flow through an intra-domain main FG channel of the SPN system; performing, by the PE node, failure detection on the intra-domain main FG channel of the SPN system and an intra-domain standby FG channel of the SPN system; and switching, by the PE node, data reception from the intra-domain main FG channel to the intra-domain standby FG channel in a case of meeting a first condition.

In a third aspect, provided is a protection switching method based on an SPN system, applied to a DNI master node in the SPN system described in the first aspect. The method includes: the DNI master node operating in a first state; performing, by the DNI master node, failure detection on an intra-domain main FG channel, an inter-domain main FG channel and a DNI channel of the SPN system; and switching the DNI master node to a second state in a case of meeting a second condition, wherein a bridging relationship between sub-ports within the DNI master node in the first state is different from a bridging relationship between sub-ports within the DNI master node in the second state.

In a fourth aspect, provided is a protection switching method based on an SPN system, applied to a DNI standby node in the SPN system described in the first aspect. The method includes: the DNI standby node operating in a third state; performing, by the DNI standby node, failure detection on an intra-domain standby FG channel, an inter-domain standby FG channel and a DNI channel of the SPN system; and switching the DNI standby node to a fourth state in a case of meeting a fourth condition, wherein a bridging relationship between sub-ports within the DNI standby node in the third state is different from a bridging relationship between sub-ports within the DNI standby node in the fourth state.

In a fifth aspect, an electronic device is provided. The electronic device includes a processor and a memory, the memory stores a program or instruction able to run on the processor, and the program or the instruction, when executed by the processor, implements the steps of the protection switching method based on the SPN system as described in the second aspect, or implements the steps of the protection switching method based on the SPN system as described in the third aspect, or implements the steps of the protection switching method based on the SPN system as described in the fourth aspect.

In a sixth aspect, a readable storage medium is provided. The readable storage medium stores a program or an instruction thereon, and the program or the instruction, when executed by a processor, implements the steps of the protection switching method based on the SPN system as described in the second aspect, or implements the steps of the protection switching method based on the SPN system as described in the third aspect, or implements the steps of the protection switching method based on the SPN system as described in the fourth aspect.

In a seventh aspect, a computer program product is provided. The computer program product includes at least one computer program, and the computer program is loaded and executed by a processor to implement the steps of the protection switching method based on the SPN system as described in the second aspect, or implement the steps of the protection switching method based on the SPN system as described in the third aspect, or implement the steps of the protection switching method based on the SPN system as described in the fourth aspect.

It should be understood that the above general description and the following detailed description are merely exemplary and explanatory, and cannot limit the present application.

### BRIEF DESCRIPTION OF DRAWING(S)

Accompanying drawings herein, which are incorporated in and constitute a part of the specification, illustrate embodiments in accordance with the present application and together with the specification, serve to explain the principles of the present application.
FIG. 1 shows a schematic diagram of an end-to-end FG channel in a cross-domain networking scenario in the related art.
FIG. 2 shows a schematic structural diagram of a slicing packet network (SPN) system provided by an exemplary embodiment of the present application.
FIG. 3 shows a schematic diagram of a bridging relationship within a DNI node in an exemplary embodiment of the present application.
FIG. 4 shows a schematic diagram of inter-domain protection switching based on an SPN system provided by another exemplary embodiment of the present application.
FIG. 5 shows a schematic diagram of protection switching in an intra-domain main FG channel failure scenario provided by an exemplary embodiment of the present application.
FIG. 6 shows a schematic diagram of protection switching in an inter-domain main FG channel failure scenario provided by another exemplary embodiment of the present application.
FIG. 7 shows a schematic diagram of protection switching in an intra-domain main FG channel failure scenario provided by another exemplary embodiment of the present application.
FIG. 8 shows a schematic diagram of protection switching in an intra-domain main FG channel failure scenario provided by another exemplary embodiment of the present application.
FIG. 9 shows a schematic diagram of protection switching in an intra-domain main FG channel failure scenario provided by another exemplary embodiment of the present application.
FIG. 10 shows a schematic diagram of domain interconnection for two different protection methods provided by an exemplary embodiment of the present application.
FIG. 11 shows a schematic flowchart of a protection switching method based on an SPN system provided by an exemplary embodiment of the present application.
FIG. 12 shows a schematic flowchart of a protection switching method based on an SPN system provided by another exemplary embodiment of the present application.
FIG. 13 shows a schematic flowchart of a protection switching method based on an SPN system provided by another exemplary embodiment of the present application.
FIG. 14 shows a structural block diagram of an electronic device provided by an exemplary embodiment of the present application.

### DETAILED DESCRIPTION

Exemplary embodiments will be illustrated in detail here, examples of which are represented in accompanying drawings. In a case where the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

First, the related art involved in the present application is introduced.

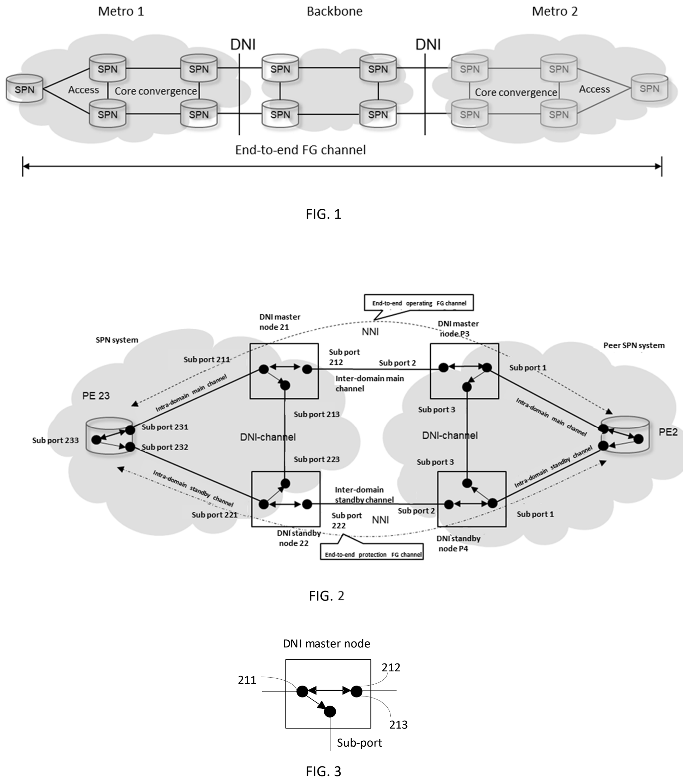

FIG. 1 shows a schematic diagram of an end-to-end fine granularity (FG) channel in a cross-domain networking scenario in the related art. As shown in FIG. 1, an end-to-end FG channel that carries cross-domain services spans across a slicing packet network (SNP) metro 1, an SPN backbone domain, and an SPN metro 2. If end-to-end 1+1 path protection is adopted for the cross-domain FG channel, there are problems such as a long protection path, long switching time, and failures generated within a domain affecting switching of other domains. In addition, due to the involvement of different operation and maintenance units and control systems, providers generally monitor, operate and maintain cross-domain services separately by domain. Therefore, for the cross-domain networking scenario, it is necessary to meet the requirements of intra-domain monitoring and protection, as well as inter-domain decoupling and inter-domain failure isolation. In other words, intra-domain failures should be recovered by intra-domain protection without triggering protection switching in other domains. The end-to-end monitoring of cross-domain services can be achieved through an operation, administration and maintenance (OAM) function of an FG channel in an end-to-end metro transport network (MTN).

In view of this, the present application proposes an SPN system that provides channel protection based on dual node interconnection (DNI), to achieve inter-domain failure isolation and protection of cross-domain services and simplify inter-domain interoperability, so as to meet the requirements of inter-domain interoperability and cross-domain protection of MTN fine granularity channel (MTN FG Channel) or MTN path channel (MTNP Channel) in different domains of SPN/MTN.

FIG. 2 shows a schematic structural diagram of an SPN system provided by an exemplary embodiment of the present application. As shown in FIG. 2, the system mainly includes: a DNI master node 21 and a DNI standby node 22 which are used for carrying out DNI with a peer SPN system. As shown in FIG. 2, the DNI master node 21 includes a first DNI channel sub-port 213, configured to establish a DNI channel with the DNI standby node 22; and the DNI standby node 22 includes a second DNI channel sub-port 223, configured to establish the DNI channel with the DNI master node. In the embodiment of the present application, the first DNI channel sub-port 213 of the DNI master node 21 is connected to the second DNI channel sub-port 223 of the DNI standby node 22, thereby establishing the DNI channel between the DNI master node 21 and the DNI standby node 22, so that when a certain intra-domain channel in the SPN system fails, another intra-domain channel can be switched to, and a transmission channel is established with an inter-domain channel before failure through the DNI channel (i.e. DNI-FG protection switching). Thus, intra-domain failure isolation and protection of cross-domain services are achieved.

In a possible implementation, as shown in FIG. 2, the SPN system may also include a provider edge (PE) node 23. As shown in FIG. 2, the PE node 23 includes: an intra-domain main FG channel sub-port 231, configured to establish an intra-domain main FG channel with the DNI master node 21; and an intra-domain standby FG channel sub-port 232, configured to establish an intra-domain standby FG channel with the DNI standby node 22. The DNI master node 21 may further include: a first intra-domain FG channel sub-port 211, configured to establish the intra-domain main FG channel with the PE node; and a first inter-domain FG channel sub-port 212, configured to establish an inter-domain main FG channel with the peer SPN system. The DNI standby node 22 may further include: a second intra-domain FG channel sub-port 221, configured to establish the intra-domain standby FG channel with the PE node 23; and a second inter-domain FG channel sub-port 222, configured to establish an inter-domain standby FG channel with the peer SPN system.

In the embodiment of the present application, the PE node 23 does not need to distinguish whether received cross-domain peer FG OAM is a peer main FG channel or a peer standby FG channel, so as to ensure the inter-domain isolation. That is, protection switching for failures occurring in a domain does not affect other domains as much as possible.

In an implementation, the intra-domain main FG channel, the intra-domain standby FG channel, the DNI channel, the inter-domain main FG channel, and the inter-domain standby FG channel are all SPN fine granularity channels, and the same in the bandwidth.

In an implementation, as shown in FIG. 2, the PE node 23 further includes a client sub-port 233 for accessing a fine granularity service, the client sub-port 233 simultaneously sends a service flow to the intra-domain main FG channel sub-port 231 and the intra-domain standby FG channel sub-port 232, and the client sub-port 233 receives a service flow from the intra-domain main FG channel sub-port 231 or the intra-domain standby FG channel sub-port 232. In this implementation, the PE node simultaneously sends the service flow to the intra-domain main FG channel sub-port 231 and the intra-domain standby FG channel sub-port 232, so that under normal circumstances, both the DNI master node 21 and the DNI standby node 22 can receive the service flow sent by the PE node; and the PE node receives the service flow from one of the intra-domain main FG channel sub-port and the intra-domain standby FG channel sub-port, which enables switching of the intra-domain FG channels in a case of failures.

In the SPN system provided in the embodiment of the present application, the intra-domain main FG channel sub-port and the intra-domain standby FG channel sub-port can provide 1+1 protection for the client sub-port of the FG services. The 1+1 protection may be 1+1 unidirectional protection or 1+1 bidirectional protection. In the service flow sending direction, the client sub-port simultaneously sends the service flow to the intra-domain main FG channel and the intra-domain standby FG channel. In the service flow receiving direction, in an initial state, namely, under normal and failure-free conditions, the client sub-port receives a service flow from the intra-domain main FG channel; and in a case where the intra-domain main FG channel fails, the client sub-port switches to the intra-domain standby FG channel to receive the service flow.

In a possible implementation, two of the first intra-domain FG channel sub-port 211, the first inter-domain FG channel sub-port 212, and the first **DNI** channel sub-port 213 within the DNI master node 21 establish a bidirectional bridge, and the remaining sub-port of the same either establishes a unidirectional receive-only bridge with one of the two first sub-ports that establish the bidirectional bridge, or remains unconnected. Two of the second intra-domain FG channel sub-port 221, the second inter-domain FG channel sub-port 222, and the second **DNI** channel sub-port 223 within the DNI standby node 22 establish a bidirectional bridge, and the remaining sub-port of the same either establishes a unidirectional receive-only bridge with one of the two second sub-ports that establish the bidirectional bridge, or remains unconnected.

FIG. 3 shows a schematic diagram of a bridging relationship within a **DNI** node provided by an exemplary embodiment of the present application. As shown in FIG. 3, the first intra-domain FG channel sub-port 211 and the first inter-domain FG channel sub-port 212 within the **DNI** master node 21 establish a bidirectional connection, and the first **DNI** channel sub-port 213 and the first intra-domain FG channel sub-port 21 establish a unidirectional receive-only bridge.

In the above implementation, within the **DNI** node, at any moment, a bidirectional bridge is established between two of the three FG channel sub-ports, while the remaining sub-port may select to receive data from one of the two sub-ports, that is, establish the unidirectional receive-only bridge.

In an implementation, in an initial state, namely, under normal and failure-free conditions, as shown in FIG. 2, the PE node 23 receives the service flow from the intra-domain main FG channel sub-port 231. Within the DNI master node 21, the first intra-domain FG channel sub-port 211 and the first inter-domain FG channel sub-port 212 establish a bidirectional bridge, and the first DNI channel sub-port 213 establishes a unidirectional receive-only bridge with the first intra-domain FG channel sub-port 211, or remains unconnected. Within the DNI standby node 22, the second intra-domain FG channel sub-port 221 and the second inter-domain FG channel sub-port 222 of establish a bidirectional bridge, and the second DNI channel sub-port 223 establishes a unidirectional receive-only bridge with the second intra-domain FG channel sub-port 221, or remains unconnected.

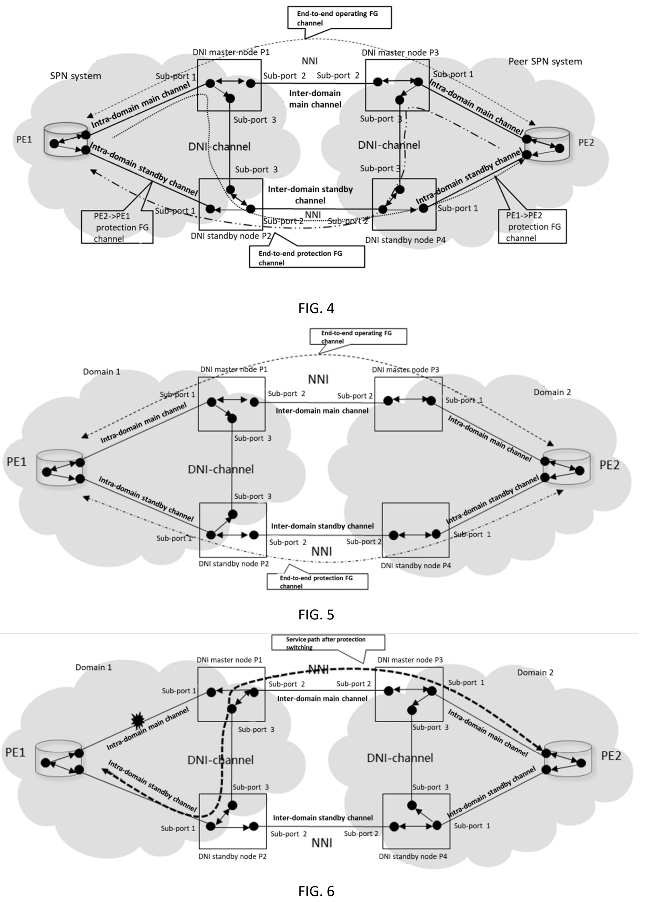

In an implementation, in an initial state, namely, under normal and failure-free conditions, as shown in FIG. 4, the PE node 23 (e.g., PE 1 or PE 2 in FIG. 4) receives the service flow from the intra-domain main FG channel sub-port 231.Within the DNI master node 21 (e.g., DNI master node P1 or DNI master node P3 in FIG. 4), the first intra-domain FG channel sub-port 211 and the first inter-domain FG channel sub-port 212 establish a bidirectional bridge, and the first DNI channel sub-port 213 establishes a unidirectional receive-only bridge with the first intra-domain FG channel sub-port 211. Within the DNI standby node 22 (e.g., DNI standby node P2 or DNI standby node P4 in FIG. 4), the second inter-domain FG channel sub-port 222 and the second DNI channel sub-port 223 of establish a bidirectional bridge, and the second intra-domain FG channel sub-port 221 establishes a unidirectional receive-only bridge with the second inter-domain FG channel sub-port 222.

In applications, which of the above implementations is used in the initial state can be set by a control system.

In an implementation, the PE node 23 may be configured to perform failure detection on the intra-domain main FG channel and the intra-domain standby FG channel in the receiving direction; the DNI master node 21 may be configured to perform failure detection on the intra-domain main FG channel, the inter-domain main FG channel and the DNI channel in the receiving direction; and the DNI standby node 22 may be configured to perform failure detection on the intra-domain standby FG channel, the inter-domain standby FG channel and the DNI channel in the receiving direction.

In the embodiment of the present application, referring to FIG. 2, optionally, the PE node 23, the DNI master node 21, and the DNI standby node 22 may perform failure detection on the intra-domain main FG channel, the intra-domain standby FG channel, and the DNI channel by means of a tandem connection monitoring (TCM) OAM function of the FG channels. A TCM OAM function of the intra-domain main FG channel may be enabled at the PE node 23 and the DNI master node 21; a TCM OAM function of the intra-domain standby FG channel may be enabled at the PE node 23 and the DNI standby node 22; and a TCM OAM function of the DNI channel may be enabled at the DNI master node 21 and the DNI standby node 22. In addition, since the DNI channel generally has only one hop, it is optional to utilize a monitoring capability and alarm of a service layer MTN section (MTNS) layer for the DNI channel without enabling the TCM OAM function of the DNI channel.

In addition, it should be noted that the TCM OAM function is generally enabled within the domain. Therefore, failure detection for the inter-domain main FG channel and the inter-domain standby FG channel can generally be completed by the DNI master node and the DNI standby node by performing non-invasive monitoring (NIM) on the OAM, sent by a peer PE node, of an end-to-end FG channel. If both DNI nodes of the two interconnected domains (i.e. the peer SPN system) support the TCM OAM function, the TCM OAM may also be used to monitor failures of the inter-domain main FG channel and the inter-domain standby FG channel. That is, the TCM OAM function of the inter-domain main FG channel is enabled at the local DNI master node 21 and a DNI master node of the peer SPN system, and the TCM OAM function of the inter-domain standby FG channel is enabled at the local DNI standby node 22 and a DNI standby node of the peer SPN system.

In the embodiment of the present application, the peer SPN system may adopt a protection switching structure same as that of the local SPN system, as shown in FIG. 2 or FIG. 4. Alternatively, the peer SPN system may also adopt a protection switching structure different from that of the local SPN system. As shown in FIG. 5, in the peer SPN system (i.e., domain 2) only PE2 is configured with 1+1 path protection for the FG channel, while the peer DNI master and standby nodes (P3, P4) are in a fixed crossing configuration without a protection configuration. That is, the intra-domain main channel and the inter-domain main channel are in fixed direct connection at the DNI master node, and the intra-domain standby channel and the inter-domain standby channel are also in fixed direct connection at the DNI standby node.

In an implementation, the PE node 23 is further configured to determine whether the end-to-end FG channel fails by detecting OAM information, sent by the peer PE node of the peer SPN system, of the end-to-end FG channel. In this implementation, the PE node 23 may terminate and monitor the OAM, sent by the PE node of the peer SPN system, of the end-to-end FG channel. For example, in FIG. 2 and FIG. 4, the PE node 23 transmits data with the PE node of the peer SPN system through an end-to-end operating FG channel. When it is detected that the end-to-end operating FG channel fails by means of OAM of the end-to-end FG channel, an end-to-end protection FG channel may be switched to.

In an implementation, the PE node 23 is further configured to switch, in a case of detecting that the intra-domain main FG channel fails and the intra-domain standby FG channel is normal in state, data reception from the intra-domain main FG channel to the intra-domain standby FG channel, and send first indication information to the DNI standby node, wherein the first indication information is used to indicate that the PE node is in an intra-domain standby FG channel receiving state.

Alternatively, in another implementation, the PE node 23 may further be configured to switch, in a case of receiving second indication information sent by the DNI standby node 22, data reception from the intra-domain main FG channel to the intra-domain standby FG channel, wherein the second indication information is used to indicate that the DNI standby node is in an intra-domain standby FG channel receiving state. For example, based on detection results of failure detection on the intra-domain standby FG channel, the inter-domain standby FG channel and the DNI channel in the receiving direction as well as a notification from DNI master node 21,the DNI standby node 22 may determine to switch to the intra-domain standby FG channel and the DNI standby node 22 may send the second indication information to the PE node 23.

Optionally, the PE node 23 may notify automatic protection switch (APS) state information of the PE node to the DNI standby node by means of APS protocols, wherein the APS state information of the PE node includes the first indication information. For example, an APS protocol function is enabled between the PE node 23 and the DNI standby node 22, and an APS message is transmitted by means of the TCM OAM function of the intra-domain standby FG channel. The PE node 23 indicates that the PE node is in the intra-domain standby FG channel receiving state by sending the APS state information of the PE node, so that the DNI standby node 22 may perform protection switching based on this information.

In the above implementation, optionally, the DNI standby node notifies APS state information of the DNI standby node to the PE node by means of the APS protocols, wherein the APS state information of the DNI standby node includes the second indication information. For example, the APS protocol function is enabled between the PE node 23 and the DNI standby node 22, and an APS message is transmitted by means of the TCM OAM function of the intra-domain standby FG channel. The DNI standby node 22 indicates that the DNI standby node 22 is in the intra-domain standby FG channel receiving state by sending the APS state information of the DNI standby node, so that the PE node 23 may perform protection switching based on this information.

Optionally, the PE node may further discover a failure in the interconnected domain by detecting of the OAM situation, received from the peer PE node, of the end-to-end FG channel. Optionally, when failure is detected, the PE node switches to the intra-domain standby FG channel.

In an implementation, in a case where at least one of the intra-domain main FG channel, the inter-domain main FG channel, or the DNI channel fails, the DNI master node 21 is further configured to send detected first failure information to the DNI standby node and reset, in a case of receiving third indication information sent by the DNI standby node, a bridge between the first intra-domain FG channel sub-port, the first inter-domain FG channel sub-port, and the first DNI channel sub-port within the DNI master node according to the third indication information, wherein the third indication information is used to indicate a first bridging relationship between the first intra-domain FG channel sub-port, the first inter-domain FG channel sub-port, and the first DNI channel sub-port. According to detection results of failure detection on the intra-domain standby FG channel, the inter-domain standby FG channel, and the DNI channel, as well as the first failure information, the DNI standby node 22 is further configured to determine, the first bridging relationship between the first intra-domain FG channel sub-port, the first inter-domain FG channel sub-port, and the first DNI channel sub-port, as well as a second bridging relationship between the second intra-domain FG channel sub-port, the second inter-domain FG channel sub-port, and the second DNI channel sub-port; and according to the determined second bridging relationship, set a bridge between the second intra-domain FG channel sub-port, the second inter-domain FG channel sub-port, and the second DNI channel sub-port of the DNI standby node, and send the third indication information to the DNI master node. In the embodiment of the present application, the DNI standby node 22 decides whether to perform protection switching, and notifies the bridging relationship between the sub-ports of the DNI master node when it is determined to perform protection switching, so that the DNI master node sets the bridging relationship between the sub-ports of the DNI master node according to the third indication information sent by the DNI standby node.

In an implementation, the DNI standby node 23 is further configured to send second indication information to the PE node in a case of determining that the inter-domain main FG channel fails or the inter-domain main FG information and the DNI channel fail simultaneously, wherein the second indication information is used to indicate that the DNI standby node is in an intra-domain standby FG channel receiving state; or determine, in a case of receiving first indication information sent by the PE node, a first bridging relationship between the first intra-domain FG channel sub-port, the first inter-domain FG channel sub-port, and the first DNI channel sub-port of the DNI master node, as well as a second bridging relationship between the first intra-domain FG channel sub-port, the first inter-domain FG channel sub-port, and the first DNI channel sub-port of the DNI standby node, wherein the first indication information is used to indicate that the PE node is in an intra-domain standby FG channel receiving state.

In the embodiment of the present application, protection switching of the DNI standby node is decided uniformly by the DNI standby node. In the case of failure, the DNI master node notifies the locally detected failure information of the intra-domain main FG channel to the DNI standby node, the inter-domain main FG channel or the DNI channel. The DNI standby node then decides the bridging relationship between the three FG channel sub-ports within each DNI standby node according to locally detected state information of the intra-domain standby FG channel, the inter-domain standby FG channel and the DNI channel, in combination with the received failure information of the DNI master node and the received APS state information of the PE node, and notifies the DNI master node of the decision result, thereby collaborating to complete the protection switching of the DNI standby node.

Optionally, intra-domain protection switching should be generally faster than inter-domain protection switching to ensure failure isolation. Therefore, when failure detection is performed, the detection cycle for performing NIM on the inter-domain main FG channel configured for the DNI master node should be greater than the detection cycle for performing TCM within the domain. That is to say, the detection cycle for the DNI master node to perform failure detection on the inter-domain main FG channel is greater than the detection cycle for performing failure detection on the intra-domain main FG channel.

Optionally, the DNI standby node may set a delay time for protection switching in a failure scenario of the inter-domain main FG channel. That is to say, the DNI standby node may delay for a period of time before performing inter-domain protection switching of the inter-domain FG channel.

In an implementation, the DNI master node 21 may send the first failure information to the DNI standby node through a target protocol channel established between the DNI master node and the DNI standby node 22, wherein the target protocol channel includes a DNI channel based general communication channel (GCC), or a management communication channel (MCC) at a metro transport network (MTN) section layer, or a local area Ethernet channel; and the DNI standby node sends the third indication information to the DNI master node through the target protocol channel established between the DNI master node and the DNI standby node. That is to say, the DNI master node 21 and the DNI standby node 22 may transmit the third indication information and the first failure information through the target protocol channel mentioned above.

In the embodiment of the present application, optionally, if the DNI master node detects failure of the a protocol channel between the DNI master node and the DNI standby nodes, that is, the DNI master node cannot receive information such as protection switching decisions from the DNI standby node, the DNI master node may switch to an autonomous decision state. That is, the DNI master node autonomously decides and completes protection switching according to the locally detected failure information of the intra-domain main FG channel, the inter-domain main FG channel, and the DNI channel.

In different failure scenarios, protection recovery of services is achieved by switching the DNI master and standby nodes to different bridging states, as well as protection switching of the PE node. After the failure is cleared, the initial state is returned to.

In an implementation, in a case of determining that the intra-domain main FG channel fails or receives the above first indication information, the inter-domain main FG channel is normal in state, the intra-domain standby FG channel is normal in state, and the DNI channel is normal in state, the DNI standby node 23 may determine the first bridging relationship as follows: a connection between the first inter-domain FG channel sub-port 212 and the first DNI channel sub-port 213 being a bidirectional connection, and a connection between the first intra-domain FG channel sub-port 211 and the first inter-domain FG channel sub-port 212 being a unidirectional receive-only bridge; and the DNI standby node 23 may determine the second bridging relationship as follows: a connection between the second intra-domain FG channel sub-port 221 and the second DNI channel sub-port 223 being a bidirectional connection, and a connection between the second inter-domain FG channel sub-port 222 and the second intra-domain FG channel sub-port 221 being a unidirectional receive-only bridge.

As shown in FIG. 6, when the intra-domain main FG channel fails, PE1 and the DNI master node P1 may discover the failure by detecting the received TCM OAM of the channel. When the receiving side of the PE1 detects the failure, the PE1 switches to the intra-domain standby channel and notifies the DNI standby node P2 of a switching state by means of the APS protocols.

When the receiving side of a sub-port 1 of the DNI master node P1 detects the failure, the DNI master node notifies the DNI standby node of failure information. The DNI standby node P2 decides the bridging relationship between the three FG channel sub-ports within each of the DNI master and standby nodes according to the received failure information of the DNI master node P1 or APS switching state information sent by the PE1, and notifies the DNI master node of a decision result, thereby collaborating to complete the bridging switching of the DNI master and standby nodes. At the same time, the DNI standby node notifies the PE1 of a switching state by the APS protocols, and the PE1 completes the switching from the local to the intra-domain standby channel according to the received APS state information (if the PE1 is already in the intra-domain standby channel, this state is maintained).

In some cases, in a case where the DNI standby node P2 determines that the intra-domain main FG channel fails or receives the first indication information, the inter-domain main FG channel is normal in state, and the DNI channel is normal in state, a connection between a sub-port 2 of the DNI master node P1 and a sub-port 3 of the DNI master node is set as a bidirectional connection, and a connection between the sub-port 1 and the sub-port 2 of the DNI master node is set as a unidirectional receive-only bridge; and a bridge between a sub-port 3 of the DNI standby node P2 and a sub-port 1 of the DNI standby node is set as a bidirectional connection, and a bridge between a sub-port 2 and the sub-port 1 of the DNI standby node is set as a unidirectional receive-only bridge, so that the service flow can reach the DNI standby node P2 from the PE1 through the intra-domain standby FG channel, then reach the DNI master node P1 through the DNI channel, and finally reach a peer DNI master node P3 through the intra-domain main FG channel. In this implementation, although the intra-domain main FG channel fails, the peer end will not be conscious of the failure or switch, thus ensuring inter-domain isolation. That is, intra-domain failures and protection switching do not affect other domains as much as possible.

In another implementation, in a case of determining that the intra-domain main FG channel is normal in state, the inter-domain main FG channel fails, and the DNI channel is normal in state, the first bridging relationship is determined as follows: a connection between the first intra-domain FG channel sub-port and the first DNI channel sub-port being a bidirectional connection, and a connection between the first inter-domain FG channel sub-port and the first intra-domain FG channel sub-port being a unidirectional receive-only bridge; and the second bridging relationship is determined as follows: a connection between the second inter-domain FG channel sub-port and the second DNI channel sub-port being a bidirectional connection, and a connection between the second intra-domain FG channel sub-port and the second inter-domain FG channel sub-port being a unidirectional receive-only bridge.

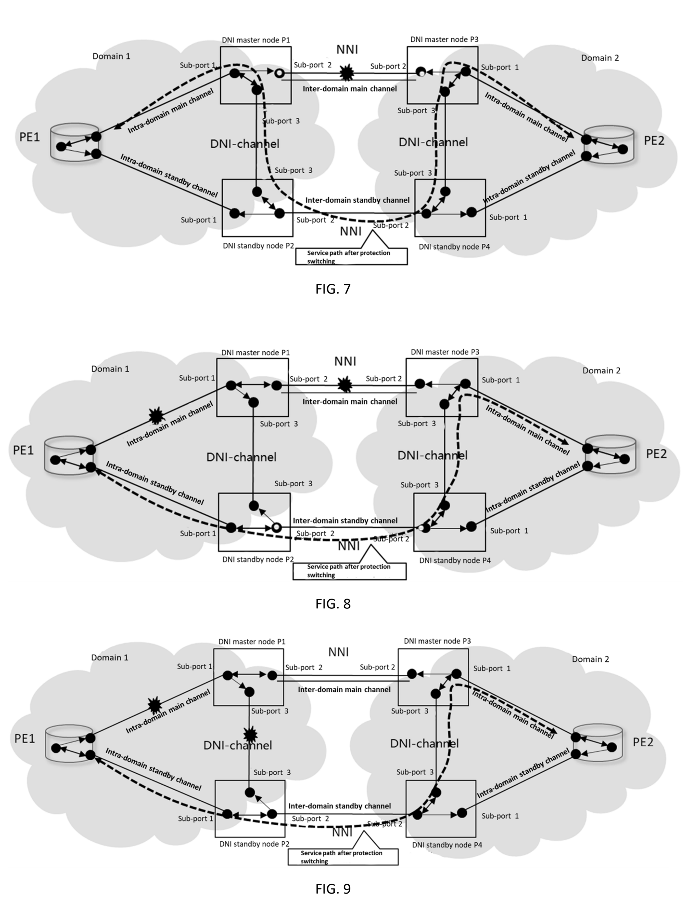

As shown in FIG. 7, when the inter-domain main FG channel fails, the sub-port 2 of the DNI master node P1 discovers the failure by detecting the received OAM of the end-to-end FG channel sent by the peer PE. The DNI master node P1 notifies the DNI standby node P2 of the failure information. The DNI standby node P2 decides the bridging relationship between the three FG channel sub-ports within each of the DNI master and standby nodes according to the failure information, and notifies the DNI master node of the decision result, thereby collaborating to complete the bridging switching of the DNI master and standby nodes. For a scenario where the inter-domain main channel fails, the protection switching is completed at the DNI master and standby nodes, and the PE1 node is neither aware of switching nor triggers switching.

In yet another implementation, in a case of determining that the intra-domain standby FG channel is normal in state, the intra-domain main FG channel fails or receives the first indication information, and the inter-domain main FG channel fails, the second bridging relationship is determined as follows: a connection between the second intra-domain FG channel sub-port and the second inter-domain FG channel sub-port being a bidirectional connection, and a connection between the second inter-domain FG channel sub-port and the second DNI channel sub-port being a unidirectional receive-only bridge. In a case where the intra-domain main FG channel fails and the inter-domain main FG channel fails, the service flow is no longer transmitted through the DNI master node. Therefore, there is no need to determine the bridging relationship between the sub-ports within the DNI master node.

As shown in FIG. 8, when the intra-domain main FG channel in domain 1 (local SPN system) fails, the PE1 and the sub-port 1 of the DNI master node P1 may discover the failure by detecting the received TCM OAM of the channel. For the failure of the inter-domain main channel, the sub-port 2 of the DNI master node P1 discovers the failure by detecting the received OAM of the end-to-end FG channel sent by the peer PE.

When a receiving side of the PE1 detects the failure, the PE1 switches to the intra-domain standby FG channel and notifies the DNI standby node P2 of a switching state through the APS protocol.

When a receiving side of the sub-port 1 of the DNI master node P1 detects a failure of the intra-domain main channel and a receiving side of the sub-port 2 detects a failure of the inter-domain main channel, the DNI master node notifies the DNI standby node P2 of the failure information.

The DNI standby node P2 decides the bridging relationship between the three FG channel sub-ports within each of the DNI master and standby nodes according to the received failure information of the DNI master node P1 or APS switching state information sent by the PE1, (for example, the bridging relationship between the sub-ports within the DNI master node may remain unchanged, while the connection between the sub-port 1 and the sub-port 2 of the DNI standby node P2 is a bidirectional connection, and the connection between the sub-port 3 and the sub-port 2 is a unidirectional receive-only bridge), and the DNI master node is notified of the decision result, thereby collaborating to complete the bridging switching of the DNI master and standby nodes. At the same time, the DNI standby node notifies the PE1 of a switching state through the APS protocol, and the PE1 completes the switching from the local to the intra-domain standby channel according to the received APS state information (if the PE1 is already in the intra-domain standby channel, this state is maintained).

In yet another implementation, in a case of determining that the intra-domain standby FG channel is normal in state, the intra-domain main FG channel fails or receives the first indication information, and the DNI channel fails, the second bridging relationship is determined as follows: a connection between the second intra-domain FG channel sub-port and the second inter-domain FG channel sub-port being a bidirectional connection, and a connection between the second DNI channel sub-port and the second inter-domain FG channel sub-port being a unidirectional receive-only connection.

As shown in FIG. 9, for the failure of the intra-domain main FG channel in domain 1, the PE1 and the sub-port 1 of the DNI master node P1 may discover the failure by detecting the received TCM OAM of the channel. For the failure of the DNI-channel in domain 1, the sub-port 3 of the DNI master node P1 and the sub-port 3 of the DNI standby node P2 may discover the failure by detecting the TCM OAM of the DNI-channel, or discover the failure by alarm of the service layer MTNS.

When a receiving side of the PE1 detects the failure, the PE1 switches to the intra-domain standby channel and notifies the DNI standby node P2 of a switching state through the APS protocol.

When the receiving side of the sub-port 1 of the DNI master node P1 detects the failure of the intra-domain main channel and the receiving side of the sub-port 3 detects the failure of the DNI-channel, the DNI master node notifies the DNI standby node P2 of the failure information.

The DNI standby node P2 decides the bridging relationship between the three FG channel sub-ports within each of the DNI master and standby nodes according to the received failure information of the intra-domain main channel and failure information of the DNI-channel sent by the DNI master node P1, or the failure of the DNI-channel detected by the sub-port 3 of the P2 node, as well as the APS switching state information sent by the PE1, (for example, the bridging relationship between the sub-ports inside the DNI master node may remain unchanged, while the connection between the sub-port 1 and the sub-port 2 of the DNI standby node P2 is a bidirectional connection, and the connection between the sub-port 3 and the sub-port 2 is a unidirectional receive-only bridge), and the DNI master node is notified of the decision result, thereby collaborating to complete the bridging switching of the DNI master and standby nodes. At the same time, the DNI standby node notifies the PE1 of a switching state through the APS protocol, and the PE1 completes the switching from the local to the intra-domain standby channel according to the received APS state information (if the PE1 is already in the intra-domain standby channel, this state is maintained).

In the failure scenario shown in FIG. 9, the sub-port 2 of the DNI master node P3 in domain 2 discovers the failure according to the detection of the received OAM situation of the end-to-end FG channel sent by the peer PE. That is, domain 2 is equivalent to detecting the failure of the inter-domain main FG channel.

In yet another implementation, in a case of determining that the intra-domain standby FG channel is normal in state, the inter-domain main FG channel fails, and the DNI channel fails, the second bridging relationship is determined as follows: a connection between the second intra-domain FG channel sub-port and the second inter-domain FG channel sub-port being a bidirectional connection, and a connection between the second DNI channel sub-port and the second inter-domain FG channel sub-port being a unidirectional receive-only connection.

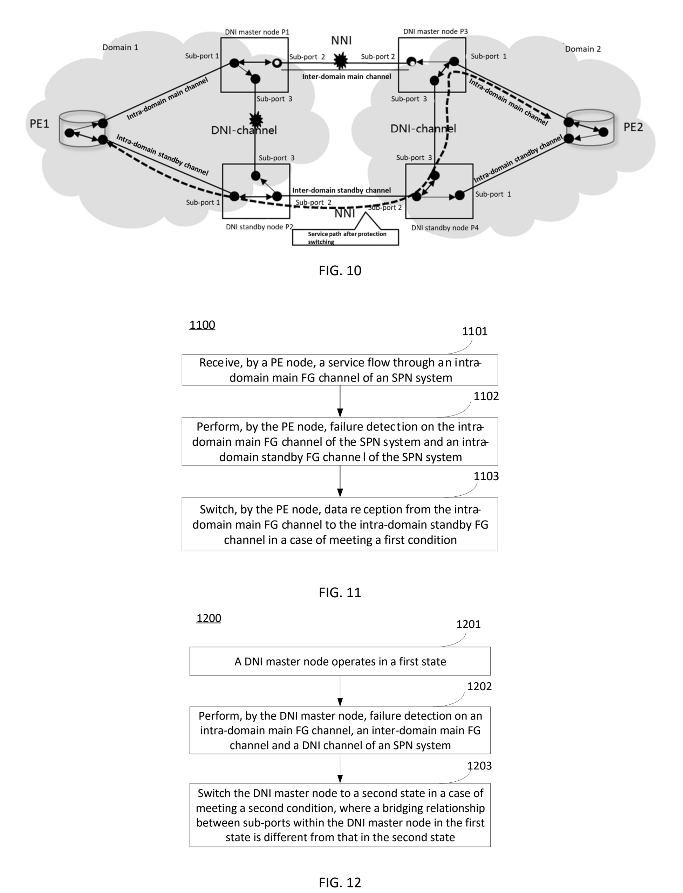

As shown in FIG. 10, for the failure of the inter-domain main FG channel, the sub-ports 2 of both the PE1 and the DNI master node P1 may discover the failure by detecting the received OAM situation of the end-to-end FG channel sent by the peer PE. For the failure of the DNI-channel in domain 1, the sub-port 3 of the DNI master node P1 and the sub-port 3 of the DNI standby node P2 may discover the failure by detecting the TCM OAM of the DNI-channel, or discover the failure by alarm of the service layer MTNS.

Optionally, when the receiving side of the PE1 detects the failure, the PE1 switches to the intra-domain standby channel and notifies the DNI standby node P2 of a switching state through the APS protocol.

When the receiving side of the sub-port 2 of the DNI master node P1 detects the failure of the inter-domain main channel and the receiving side of the sub-port 3 detects the failure of the DNI-channel, the DNI master node notifies the DNI standby node P2 of the failure information.

The DNI standby node P2 decides the bridging relationship between the three FG channel sub-ports within each of the DNI master and standby nodes according to the received failure information of the inter-domain main channel and failure information of the DNI-channel sent by the DNI master node P1, or the failure of the DNI-channel detected by the sub-port 3 of the P2 node, or the APS switching state information sent by the PE1, (for example, the bridging relationship between the sub-ports inside the DNI master node may remain unchanged, while the connection between the sub-port 1 and the sub-port 2 of the DNI standby node P2 is a bidirectional connection, and the connection between the sub-port 3 and the sub-port 2 is a unidirectional receive-only bridge), and the DNI master node is notified of the decision result, thereby collaborating to complete the bridging switching of the DNI master and standby nodes. At the same time, the DNI standby node notifies the PE1 of a switching state through the APS protocol, and the PE1 completes the switching from the local to the intra-domain standby channel according to the received APS state information (if the PE1 is already in the intra-domain standby channel, this state is maintained).

In the embodiment of the present application, in different failure scenarios, protection recovery of the services is achieved by switching the DNI master and standby nodes to different bridging states, as well as protection switching of the PE node. After the failure is cleared, it returns to the initial state.

It should further be noted that a DNI-FG protection scheme of the present application is also applicable to cross-domain protection of an optical service unit (OSU) in an optical transport network (OTN).

FIG. 11 shows a schematic flowchart of a protection switching method based on an SPN system provided by an exemplary embodiment of the present application. The method 1100 is applied to the PE node in the SPN system as described above, and as shown in FIG. 11, the method 1100 may include the following steps.

At step 1101, the PE node receives a service flow through an intra-domain main FG channel of the SPN system.

For example, in an initial state, a client sub-port of the PE node may simultaneously send the service flow to an intra-domain main FG channel sub-port and an intra-domain standby FG channel sub-port, and the client sub-port receives the service flow from the intra-domain main FG channel sub-port.

At step 1102, the PE node performs failure detection on the intra-domain main FG channel of the SPN system and the intra-domain standby FG channel of the SPN system.

In an implementation, the PE node may perform failure detection by enabling a TCM OAM function for the intra-domain main FG channel with a DNI master node; and the PE node performs failure detection by enabling a TCM OAM function for the intra-domain standby FG channel with a DNI standby node.

At step 1103, the PE node switches data reception from the intra-domain main FG channel to the intra-domain standby FG channel in a case of meeting a first condition.

Optionally, the first condition includes at least one of the following:
(1) It is detected that the intra-domain main FG channel fails
(2) second indication information sent by the DNI standby node of the SPN system is received, wherein the second indication information is used to indicate that the DNI standby node is in an intra-domain standby FG channel receiving state.

In an implementation, the PE node sends first indication information to the DNI standby node in a case of detecting that the intra-domain main FG channel fails, wherein the first indication information is used to indicate that the PE node is in an intra-domain standby FG channel receiving state. Thus, the DNI standby node may perform corresponding switching decisions.

In an implementation, sending, by the PE node, the first indication information to the DNI standby node may include: notifying, by the PE node, APS state information of the PE node to the DNI standby node by means of APS protocols, wherein the APS state information of the PE node includes the first indication information. Receiving the second indication information sent by the DNI standby node may include: receiving, by the PE node, APS state information of the DNI standby node from the DNI standby node by means of the APS protocol, wherein the APS state information of the DNI standby node includes the second indication information. In this implementation, the APS protocols are enabled between the PE node and the DNI standby node, and a peer end is notified of which intra-domain FG channel is used by means of APS state information of its own.

In an implementation, the method 1100 above may further include: in a case of determining that an end-to-end FG channel fails by detecting OAM information of the end-to-end FG channel sent by a peer PE node of a peer SPN system, switching the PE node from a main end-to-end FG channel to a standby end-to-end FG channel. The main end-to-end FG channel includes: an intra-domain main FG channel of the SPN system, an inter-domain main FG channel between the SPN system and the peer SPN system, and an intra-domain main FG channel of the peer SPN system. The standby end-to-end FG channel includes: an intra-domain standby FG channel of the SPN system, an inter-domain standby FG channel between the SPN system and the peer SPN system, and an intra-domain standby FG channel of the peer SPN system.

In one or more implementations, in a case of detecting that the intra-domain main FG channel recovers, or the received APS state information of the DNI standby node indicates that the DNI standby node is in an intra-domain main FG channel receiving state, the PE node may also return to the initial state, i.e., data reception is switched back to the inter-domain main FG channel.

In the embodiment of the present application, after receiving the service flow through the intra-domain main FG channel of the SPN system, the PE node may enable a tandem connection monitoring (TCM) OAM function through the intra-domain main FG channel or the intra-domain standby FG channel to perform failure detection on the intra-domain main FG channel of the SPN system and the intra-domain standby FG channel of the SPN system, and then perform corresponding operations according to the detected failure situation, such as switching to the intra-domain standby FG channel to send the first indication information to the DNI standby node, or switching to the intra-domain standby FG channel in a case of receiving the second indication information sent by the DNI standby node, thereby achieving inter-domain failure isolation and protection of cross-domain services, simplifying inter-domain interoperability, and meeting the requirements of inter-domain interoperability and cross-domain protection for an MTN FG channel or an MTNP channel in different domains of SPN or MTN.

FIG. 12 shows a schematic flowchart of a protection switching method based on an SPN system provided by another exemplary embodiment of the present application. The method 1200 is applied to the DNI master node in the SPN system as described above, and as shown in FIG. 12, the method 1200 may include the following steps.

At step 1201, the DNI master node operates in a first state.

Optionally, in the first state, a connection between a first intra-domain FG channel sub-port and a first inter-domain FG channel sub-port of the DNI master node is set as a bidirectional bridge, and a unidirectional receive-only bridge is established between a first DNI channel sub-port and the first intra-domain FG channel sub-port of the DNI master node.

At step 1202, the DNI master node performs failure detection on an intra-domain main FG channel, an inter-domain main FG channel and a DNI channel of the SPN system.

For example, the DNI master node performs failure detection by enabling a TCM OAM function for the intra-domain main FG channel with a PE node of the SPN system.

For example, the DNI master node performs failure detection on the inter-domain main FG channel by non-intrusive monitoring on OAM of an end-to-end FG channel sent by a PE node of a peer SPN system; or the DNI master node performs failure detection by enabling a TCM OAM function for the inter-domain main FG channel with a DNI master node of the peer SPN system.

For another example, the DNI master node performs failure detection by enabling a TCM OAM function for the DNI channel with a DNI standby node; or the DNI master node performs failure detection on the DNI channel through a monitoring capability of an MTN section layer.

At step 1203, the DNI master node switches to a second state in a case of meeting a second condition, wherein a bridging relationship between sub-ports within the DNI master node in the first state is different from a bridging relationship between sub-ports within the DNI master node in the second state.

In an implementation, the second condition may include: receiving third indication information sent by the DNI standby node, wherein the third indication information is used to indicate a first bridging relationship between the first intra-domain FG channel sub-port, the first inter-domain FG channel sub-port, and the first DNI channel sub-port of the DNI master node. That is, the third indication information is used to indicate a bridging relationship between sub-ports within the DNI master node in the second state.

In an implementation, in a case of detecting that at least one of the intra-domain main FG channel, the inter-domain main FG channel, or the DNI channel fails, detected first failure information is sent to the DNI standby node wherein the first failure information is used to indicate that at least one of the intra-domain main FG channel, the inter-domain main FG channel, or the DNI channel fails. Thus, the DNI standby node may perform switching decisions based on the first failure information.

In an implementation, switching the DNI master node to the second state includes one of the following:
(1) Based on the third indication information, a connection between the first inter-domain FG channel sub-port and the first DNI channel sub-port is set as a bidirectional bridge, and a connection between the first intra-domain FG channel sub-port and the first inter-domain FG channel sub-port is set as a unidirectional receive-only bridge, such as a bridging relationship between the sub-ports inside the DNI master node in the failure scenario shown in FIG. 6.
(2) Based on the third indication information, a connection between the first intra-domain FG channel sub-port and the first DNI channel sub-port is set as a bidirectional connection, and a connection between the first inter-domain FG channel sub-port and the first intra-domain FG channel sub-port is set as a unidirectional receive-only bridge, such as a bridging relationship between the sub-ports inside the DNI master node in the failure scenario shown in FIG. 7.

In an implementation, after the above step 1203, the method 1300 above may further include: returning the DNI master node to the first state in a case of meeting a third condition.

Optionally, the third condition includes: receiving fourth indication information sent by the DNI standby node, wherein the fourth indication information indicates that the DNI master node returns to the first state. For example, the DNI standby node may send the fourth indication information in a case of determining failure recovery.

In the embodiment of the present application, when operating in the first state, the DNI master node performs failure detection on the intra-domain main FG channel, the inter-domain main FG channel, and the DNI channel of the SPN system, then sends the second failure information to the DNI standby node according to the detected failure situation so as to inform the DNI standby node of the failure situation of each channel, and resets the bridge between various sub-ports after receiving the third indication information sent by the DNI standby node, thereby achieving protection switching within the node by adjusting the bridge between various sub-ports. After failure recovery, the DNI master node returns to the initial state and resumes normal operation again.

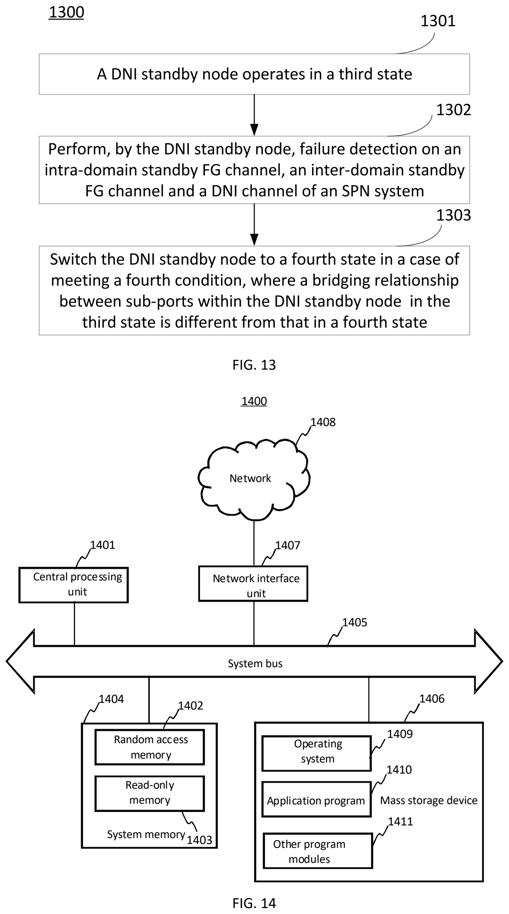

FIG. 13 shows a schematic flowchart of a protection switching method based on an SPN system provided by another exemplary embodiment of the present application. The method 1300 is applied to the DNI standby node in the SPN system as described above, and as shown in FIG. 13, the method 1300 may include the following steps.

At step 1301, the DNI standby node operates in a third state.

In the third state, a second intra-domain FG channel sub-port and a second inter-domain FG channel sub-port of the DNI standby node establish a bidirectional bridge, and a second DNI channel sub-port and the second intra-domain FG channel sub-port establish a unidirectional receive-only bridge, or the second inter-domain FG channel sub-port and the second DNI channel sub-port of the DNI standby node establish a bidirectional bridge, and the second intra-domain FG channel sub-port and the second inter-domain FG channel sub-port establish a unidirectional receive-only bridge.

At step 1302, the DNI standby node performs failure detection on an intra-domain standby FG channel, an inter-domain standby FG channel and a DNI channel of the SPN system.

In an implementation, performing, by the DNI standby node, failure detection on the intra-domain standby FG channel of the SPN system may include: performing, by the DNI standby node, failure detection by enabling a TCM OAM function for the intra-domain standby FG channel with a PE node of the SPN system.

In an implementation, performing, by the DNI standby node, failure detection on the inter-domain main FG channel of the SPN system may include: performing, by the DNI standby node, failure detection on the inter-domain standby FG channel by non-intrusive monitoring on OAM of an end-to-end FG channel sent by a PE node of a peer SPN system; or performing, by the DNI standby node, failure detection by enabling a TCM OAM function for the inter-domain standby FG channel with a DNI standby node of the peer SPN system.

In an implementation, performing, by the DNI standby node, failure detection on the DNI channel of the SPN system may include: performing, by the DNI standby node, failure detection by enabling a TCM OAM function for the DNI channel with a DNI master node; or performing, by the DNI standby node, failure detection on the DNI channel through a monitoring capability of an MTN section layer.

At step 1303, the DNI standby node switches to a fourth state in a case of meeting a fourth condition, wherein a bridging relationship between sub-ports within the DNI standby node in the third state is different from a bridging relationship between sub-ports within the DNI standby node the fourth state.

In an implementation, before the DNI standby node switches to the fourth state, the DNI standby node receives first failure information sent by the DNI master node of the SPN system and/or first indication information sent by the PE node, wherein the first failure information is used to indicate that at least one of the intra-domain main FG channel, the inter-domain main FG channel, or the DNI channel fails, and the first indication information is used to indicate that the PE node is in a standby state.

In an implementation, the fourth condition may include: determining that at least one of the inter-domain main FG channel, the intra-domain standby FG channel, the inter-domain standby FG channel, or the DNI channel fails based on the detected failure information and the received first failure information and/or first indication information.

In an implementation, in a case of meeting the fourth condition, the DNI standby node may determine a first bridging relationship between a first intra-domain FG channel sub-port, a first inter-domain FG channel sub-port, and a first DNI channel sub-port of the DNI master node based on the detected failure information and the received first failure information and/or first indication information; and send third indication information to the DNI master node, wherein the third indication information is used to indicate the first bridging relationship.

In an implementation, in the case of meeting the fourth condition, the method may further include: sending second indication information to the PE node in a case of determining that the inter-domain main FG channel fails or the inter-domain main FG channel and the DNI channel fail simultaneously based on the detected failure information and the first failure information, wherein the second indication information is used to indicate that the DNI standby node is in a standby state.

In an implementation, in a case of determining that the intra-domain main FG channel fails, the inter-domain main FG channel is normal in state, the intra-domain standby FG channel is normal in state, and the DNI channel is normal in state based on the detected failure information and the received first failure information and/or first indication information, the DNI standby node determines, the first bridging relationship as follows: a connection between the first inter-domain FG channel sub-port and the first DNI channel sub-port being set as a bidirectional connection, and a connection between the first intra-domain FG channel sub-port and the first inter-domain FG channel sub-port being set as a unidirectional receive-only bridge.

In an implementation, in a case of determining that the intra-domain main FG channel is normal in state, the inter-domain main FG channel fails, the intra-domain standby FG channel is normal in state, and the DNI channel is normal in state based on the detected failure information and the received first failure information and/or first indication information, the DNI standby node determines the first bridging relationship as follows: a connection between the first intra-domain FG channel sub-port and the first DNI channel sub-port being set as a bidirectional connection, and a connection between the first inter-domain FG channel sub-port and the first intra-domain FG channel sub-port being set as a unidirectional receive-only bridge.

In an implementation, switching the DNI standby node to the fourth state in the case of meeting the fourth condition includes the following:

In a case of determining that the intra-domain standby FG channel is normal in state, the inter-domain main FG channel is normal in state, the intra-domain main FG channel fails, and the DNI channel is normal in state based on the detected failure information and the received first failure information and/or first indication information, it is determined to switch to the fourth state, wherein in the fourth state, a bridging relationship between sub-ports within the DNI standby node is as follows: a connection between the second intra-domain FG channel sub-port and the second DNI channel sub-port being set as a bidirectional connection, and a connection between the second inter-domain FG channel sub-port and the second intra-domain FG channel sub-port being set as a unidirectional receive-only bridge, such as switching in a failure scenario shown in FIG. 6.

Alternatively, in a case of determining that the intra-domain standby FG channel is normal in state, the inter-domain main FG channel fails, the intra-domain main FG channel is normal in state, and the DNI channel is normal in state based on the detected failure information and the received first failure information and/or first indication information, it is determined to switch to the fourth state, wherein in the fourth state, a bridging relationship between sub-ports within the DNI standby node is as follows: a connection between the second inter-domain FG channel sub-port and the second DNI channel sub-port being set as a bidirectional connection, and a connection between the second intra-domain FG channel sub-port and the second inter-domain FG channel sub-port being set as a unidirectional receive-only bridge, such as switching in a failure scenario shown in FIG. 7.

Alternatively, in a case of determining that the intra-domain standby FG channel is normal in state, the intra-domain main FG channel fails, the inter-domain main FG channel fails, and the DNI channel is normal in state based on the detected failure information and the received first failure information and/or first indication information, it is determined to switch to the fourth state, wherein in the fourth state, a bridging relationship between sub-ports within the DNI standby node is as follows: a connection between the second intra-domain FG channel sub-port and the second inter-domain FG channel sub-port being set as a bidirectional connection, and a connection between the second inter-domain FG channel sub-port and the second DNI channel sub-port being set as a unidirectional receive-only bridge, such as switching in a failure scenario shown in FIG. 8.

Alternatively, in a case of determining that the intra-domain standby FG channel is normal in state, the intra-domain main FG channel fails, and the DNI channel fails based on the detected failure information and the received first failure information and/or first indication information, it is determined to switch to the fourth state, wherein in the fourth state, a bridging relationship between sub-ports within the DNI standby node is as follows: a connection between the second intra-domain FG channel sub-port and the second inter-domain FG channel sub-port being set as a bidirectional connection, and a connection between the second inter-domain FG channel sub-port and the second DNI channel sub-port being set as a unidirectional receive-only connection, such as switching in a failure scenario shown in FIG. 9.

Alternatively, in a case of determining that the intra-domain standby FG channel is normal in state, the inter-domain main FG channel fails, and the DNI channel fails based on the detected failure information and the received first failure information and/or first indication information, it is determined to switch to the fourth state, wherein in the fourth state, a bridging relationship between sub-ports within the DNI standby node is as follows: a connection between the second intra-domain FG channel sub-port and the second inter-domain FG channel sub-port being set as a bidirectional connection, and a connection between the second inter-domain FG channel sub-port and the second DNI channel sub-port being set as a unidirectional receive-only connection, such as switching in a failure scenario shown in FIG. 10.

In an implementation, after switching the DNI standby node to the fourth state, the method further includes: in a case of determining failure recovery based on the detected failure information and the received first failure information and/or first indication information, the third state is restored to.

In the above implementation, in the case of determining failure recovery, the DNI standby node may further send fourth indication information to the DNI master node to indicate that the DNI master node returns to the first state, and send fifth indication information to the PE node to indicate that the PE node switches to the inter-domain main FG channel.

In the embodiment of the present application, when the DNI standby node operates in the third state and meets the fourth condition, the bridging relationship between various sub-ports is determined. That is, the bridge between various sub-ports is adjusted according to different pieces of failure information to complete the protection switching within the node, and then indication information is sent to the nodes related to the failure; and after failure recovery, the DNI standby node returns to the initial state and resumes normal operation.

FIG. 14 shows a structural block diagram of an electronic device provided by an exemplary embodiment of the present application. The electronic device 1400 includes a central processing unit (CPU) 1401, a system memory 1404 including a random access memory (RAM) 1402 and a read-only memory (ROM) 1403, and a system bus 1405 connecting the system memory 1404 with the central processing unit 1401. The electronic device 1400 further includes a mass storage device 1406 for storing an operating system 1409, a client 1410, and other program modules 1411.

Without loss of generality, a computer-readable medium may include a computer storage medium and a communication medium. The computer storage medium includes volatile and non-volatile, removable and non-removable media implemented in any method or technology for storing information such as computer-readable instructions, data structures, program modules, or other data. The computer storage medium includes a RAM, a ROM, an erasable programmable read only Mmemory (EPROM), an electrically-erasable programmable read-only memory (EEPROM), flash memory or other solid-state storage technologies, a CD-ROM, a digital versatile disc (DVD) or other optical storage, cassette, magnetic tape, magnetic disk storage or other magnetic storage devices. Certainly, those skilled in the art may know that the computer storage medium is not limited to the above-mentioned types. The system memory 1404 and the mass storage device 1406 mentioned above may be collectively referred to as the memory.

According to various embodiments of the present disclosure, the electronic device 1400 may also operate via a remote computer connected to a network through the Internet and other networks. That is to say, the electronic device 1400 may be connected to a network 1408 through a network interface unit 1407 connected to the system bus 1405, or may also be connected to other types of networks or remote computer systems (not shown) using the network interface unit 1407.

The memory further includes at least one instruction, at least one program, a code set, or an instruction set. The at least one instruction, the at least one program, the code set, or the instruction set are stored in the memory. The central processing unit 1401 implements all or part of the steps in the protection switching method based on the SPN system shown in the above embodiments by executing the at least one instruction, the at least one program, the code set, or the instruction set.

A person skilled in the art may understand that a structure shown in FIG. 14 constitutes no limitation on the electronic device 1400, and the electronic device may include more or fewer components than those shown in the figure, or combine some components, or adopt different component arrangements.

In an exemplary embodiment, a computer-readable storage medium is further provided. The computer-readable storage medium stores at least one computer program thereinto. The computer program is loaded and executed by a processor to implement all or part of the steps in the above protection switching method based on the SPN system. For example, the computer-readable storage medium may be a read-only memory (ROM), a random access memory (RAM), a compact disc read-only memory (CD-ROM), a magnetic tape, a floppy disk, an optical data storage device and the like.

In an exemplary embodiment, a computer program product is further provided. The computer program product includes at least one computer program, and the computer program is loaded and executed by a processor to implement all or part of the steps in the above protection switching method based on the SPN system.

Those skilled in the art will easily figure out other implementation solutions of the present application after considering the specification and practicing the invention disclosed here. The present disclosure is intended to cover any variations, uses, or adaptations of the present disclosure following the general principles of the present disclosure and including such departures from the present disclosure as come within known or customary practice in the art. The specification and the embodiments are merely regarded as being for example, and the true scope and spirit of the present application are indicated by the claims.

It will be appreciated that the present application is not limited to the exact structure that has been described above and shown in the accompanying drawings, and that various modifications and changes may be made without departing from the scope of the present application. The scope of the present application is limited merely by the appended claims.

## Claims

1. A slicing packet network called SPN system, comprising: a dual node interconnection called DNI master node and a DNI standby node which are used for carrying out DNI with a peer SPN system, wherein
the DNI master node comprises a first DNI channel sub-port, configured to establish a DNI channel with the DNI standby node, and
the DNI standby node comprises a second DNI channel sub-port, configured to establish the DNI channel with the DNI master node.

2. The system according to claim 1, wherein the system further comprises: a provider edge called PE node;
the PE node comprises:
an intra-domain main fine-granularity called FG channel sub-port, configured to establish an intra-domain main FG channel with the DNI master node, and
an intra-domain standby FG channel sub-port, configured to establish an intra-domain standby FG channel with the DNI standby node;
the DNI master node further comprises:
a first intra-domain FG channel sub-port, configured to establish the intra-domain main FG channel with the PE node, and
a first inter-domain FG channel sub-port, configured to establish an inter-domain main FG channel with the peer SPN system; and
the DNI standby node further comprises:
a second intra-domain FG channel sub-port, configured to establish the intra-domain standby FG channel with the PE node, and
a second inter-domain FG channel sub-port, configured to establish an inter-domain standby FG channel with the peer SPN system.

3. The system according to claim 2, wherein the intra-domain main FG channel, the intra-domain standby FG channel, the DNI channel, the inter-domain main FG channel, and the inter-domain standby FG channel are all SPN fine granularity channels, and the same in bandwidth.

4. The system according to claim 2, wherein the PE node further comprises a client sub-port for accessing a fine granularity service, the client sub-port simultaneously sends a service flow to the intra-domain main FG channel sub-port and the intra-domain standby FG channel sub-port, and the client sub-port receives a service flow from the intra-domain main FG channel sub-port or the intra-domain standby FG channel sub-port.

5. The system according to claim 2, wherein
within the DNI master node, two first sub-ports of the first intra-domain FG channel sub-port, the first inter-domain FG channel sub-port, and the first DNI channel sub-port establish a bidirectional bridge, and a remaining first sub-port either establishes a unidirectional receive-only bridge with one of the two first sub-ports or remains unconnected; and
within the DNI standby node, two second sub-ports of the second intra-domain FG channel sub-port, the second inter-domain FG channel sub-port, and the second DNI channel sub-port establish a bidirectional bridge, and a remaining second sub-port either establishes a unidirectional receive-only bridge with one of the two second sub-ports or remains unconnected.

6. The system according to claim 5, wherein in an initial state,
the PE node receives a service flow from the intra-domain main FG channel sub-port;
within the DNI master node, the first intra-domain FG channel sub-port and the first inter-domain FG channel sub-port establish a bidirectional bridge, and the first DNI channel sub-port either establishes a unidirectional receive-only bridge with the first intra-domain FG channel sub-port or remains unconnected; and within the DNI standby node, the second intra-domain FG channel sub-port and the second inter-domain FG channel sub-port establish a bidirectional bridge, and the second DNI channel sub-port either establishes a unidirectional receive-only bridge with the second intra-domain FG channel sub-port, or remains unconnected; or
within the DNI master node, the first intra-domain FG channel sub-port and the first inter-domain FG channel sub-port establish a bidirectional bridge, the first DNI channel sub-port establishes a unidirectional receive-only bridge with the first intra-domain FG channel sub-port; and within the DNI standby node the second inter-domain FG channel sub-port and the second DNI channel sub-port establish a bidirectional bridge, and the second intra-domain FG channel sub-port establishes a unidirectional receive-only bridge with the second inter-domain FG channel sub-port.

7. The system according to any one of claims 2 to 5, wherein
the PE node is configured to perform failure detection on the intra-domain main FG channel and the intra-domain standby FG channel in a receiving direction;
the DNI master node is configured to perform failure detection on the intra-domain main FG channel, the inter-domain main FG channel and the DNI channel in a receiving direction; and
the DNI standby node is configured to perform failure detection on the intra-domain standby FG channel, the inter-domain standby FG channel and the DNI channel in a receiving direction.

8. The system according to claim 7, wherein the PE node is further configured to:
switch, in a case of detecting that the intra-domain main FG channel fails and the intra-domain standby FG channel is normal in state, data reception from the intra-domain main FG channel to the intra-domain standby FG channel, and send first indication information to the DNI standby node, wherein the first indication information is used to indicate that the PE node is in an intra-domain standby FG channel receiving state; or
switch, in a case of receiving second indication information from the DNI standby node, data reception from the intra-domain main FG channel to the intra-domain standby FG channel, wherein the second indication information is used to indicate that the DNI standby node is in an intra-domain standby FG channel receiving state.

9. The system according to claim 7, wherein
the DNI master node is further configured to send detected first failure information to the DNI standby node in a case where at least one of the intra-domain main FG channel, the inter-domain main FG channel, or the DNI channel fails, and reset, in a case of receiving third indication information from the DNI standby node, a bridge between the first intra-domain FG channel sub-port, the first inter-domain FG channel sub-port, and the first DNI channel sub-port within the DNI master node according to the third indication information, wherein the third indication information is used to indicate a first bridging relationship between the first intra-domain FG channel sub-port, the first inter-domain FG channel sub-port, and the first DNI channel sub-port; and
the DNI standby node is further configured to determine, according to detection results of failure detection on the intra-domain standby FG channel, the inter-domain standby FG channel, and the DNI channel, as well as the first failure information, a first bridging relationship between the first intra-domain FG channel sub-port, the first inter-domain FG channel sub-port, and the first DNI channel sub-port, as well as a second bridging relationship between the second intra-domain FG channel sub-port, the second inter-domain FG channel sub-port, and the second DNI channel sub-port, set a bridge between the second intra-domain FG channel sub-port, the second inter-domain FG channel sub-port, and the second DNI channel sub-port of the DNI standby node according to the determined second bridging relationship, and send the third indication information to the DNI master node.

10. The system according to claim 9, wherein the DNI standby node is further configured to:
send second indication information to the PE node in a case of determining that the inter-domain main FG channel fails or the inter-domain main FG channel and the DNI channel fail simultaneously, wherein the second indication information is used to indicate that the DNI standby node is in an intra-domain standby FG channel receiving state; or
determine, in a case of receiving first indication information from the PE node, a first bridging relationship between the first intra-domain FG channel sub-port, the first inter-domain FG channel sub-port, and the first DNI channel sub-port of the DNI master node, as well as a second bridging relationship between the first intra-domain FG channel sub-port, the first inter-domain FG channel sub-port, and the first DNI channel sub-port of the DNI standby node, wherein the first indication information is used to indicate that the PE node is in an intra-domain standby FG channel receiving state.

11. The system according to claim 8 or 10, wherein
the PE node notifies an automatic protection switch called APS state information of the PE node to the DNI standby node by means of APS protocols, wherein the APS state information of the PE node comprises the first indication information; and
the DNI standby node notifies APS state information of the DNI standby node to the PE node by means of APS protocols, wherein the APS state information of the DNI standby node comprises the second indication information.

12. The system according to claim 9, wherein
the DNI master node sends the first failure information to the DNI standby node through a target protocol channel established between the DNI master node and the DNI standby node, wherein the target protocol channel comprises a DNI channel based general communication channel called GCC, or a management communication channel called MCC at a metro transport network called MTN section layer, or a local area Ethernet channel; and
the DNI standby node sends the third indication information to the DNI master node through the target protocol channel established between the DNI standby node and the DNI master node.

13. The system according to claim 9, wherein determining, by the DNI standby node, the first bridging relationship between the first intra-domain FG channel sub-port, the first inter-domain FG channel sub-port, and the first DNI channel sub-port, as well as the second bridging relationship between the second intra-domain FG channel sub-port, the second inter-domain FG channel sub-port, and the second DNI channel sub-port comprises:
determining, in a case of determining that the intra-domain main FG channel fails or receives first indication information, the inter-domain main FG channel is normal in state, the intra-domain standby FG channel is normal in state, and the DNI channel is normal in state, the first bridging relationship as follows: a connection between the first inter-domain FG channel sub-port and the first DNI channel sub-port being a bidirectional connection, and a connection between the first intra-domain FG channel sub-port and the first inter-domain FG channel sub-port being a unidirectional receive-only bridge; and the second bridging relationship as follows: a connection between the second intra-domain FG channel sub-port and the second DNI channel sub-port being a bidirectional connection, and a connection between the second inter-domain FG channel sub-port and the second intra-domain FG channel sub-port being a unidirectional receive-only bridge.

14. The system according to claim 9, wherein determining, by the DNI standby node, the first bridging relationship between the first intra-domain FG channel sub-port, the first inter-domain FG channel sub-port, and the first DNI channel sub-port, as well as the second bridging relationship between the second intra-domain FG channel sub-port, the second inter-domain FG channel sub-port, and the second DNI channel sub-port and according to the determined second bridging relationship comprises:
determining, in a case of determining that the intra-domain main FG channel is normal in state, the inter-domain main FG channel fails, and the DNI channel is normal in state, the first bridging relationship as follows: a connection between the first intra-domain FG channel sub-port and the first DNI channel sub-port being a bidirectional connection, and a connection between the first inter-domain FG channel sub-port and the first intra-domain FG channel sub-port being a unidirectional receive-only bridge; and the second bridging relationship as follows: a connection between the second inter-domain FG channel sub-port and the second DNI channel sub-port being a bidirectional connection, and a connection between the second intra-domain FG channel sub-port and the second inter-domain FG channel sub-port being a unidirectional receive-only bridge.

15. The system according to claim 9, wherein determining, by the DNI standby node, the second bridging relationship between the second intra-domain FG channel sub-port, the second inter-domain FG channel sub-port, and the second DNI channel sub-port and according to the determined second bridging relationship comprises:
determining, in a case of determining that the intra-domain standby FG channel is normal in state, the intra-domain main FG channel fails or receives first indication information, and the inter-domain main FG channel fails, the second bridging relationship as follows: a connection between the second intra-domain FG channel sub-port and the second inter-domain FG channel sub-port being a bidirectional connection, and a connection between the second inter-domain FG channel sub-port and the second DNI channel sub-port being a unidirectional receive-only bridge.

16. The system according to claim 9, wherein determining, by the DNI standby node, the second bridging relationship between the second intra-domain FG channel sub-port, the second inter-domain FG channel sub-port, and the second DNI channel sub-port and according to the determined second bridging relationship comprises:
determining, in a case of determining that the intra-domain standby FG channel is normal in state, the intra-domain main FG channel fails or receives first indication information, and the DNI channel fails, the second bridging relationship as follows: a connection between the second intra-domain FG channel sub-port and the second inter-domain FG channel sub-port being a bidirectional connection, and a connection between the second inter-domain FG channel sub-port and the second DNI channel sub-port being a unidirectional receive-only connection.

17. The system according to claim 9, wherein determining, by the DNI standby node, the second bridging relationship between the second intra-domain FG channel sub-port, the second inter-domain FG channel sub-port, and the second DNI channel sub-port and according to the determined second bridging relationship comprises:
determining, in a case of determining that the intra-domain standby FG channel is normal in state, the inter-domain main FG channel fails, and the DNI channel fails, the second bridging relationship as follows: a connection between the second intra-domain FG channel sub-port and the second inter-domain FG channel sub-port being a bidirectional connection, and a connection between the second inter-domain FG channel sub-port and the second DNI channel sub-port being a unidirectional receive-only connection.

18. The system according to claim 7, wherein
the PE node is further configured to determine whether an end-to-end FG channel fails by detecting operation, administration and maintenance called OAM information, from a peer PE node of the peer SPN system, of the end-to-end FG channel.

19. A protection switching method based on an SPN system, performed by a PE node in the SPN system according to any one of claims 2 to 18, comprising:
receiving, by the PE node, a service flow through an intra-domain main FG channel of the SPN system;
performing, by the PE node, failure detection on the intra-domain main FG channel of the SPN system and an intra-domain standby FG channel of the SPN system; and
switching, by the PE node, data reception from the intra-domain main FG channel to the intra-domain standby FG channel in a case of meeting a first condition.

20. The method according to claim 19, wherein the first condition comprises at least one of the following:
detecting that the intra-domain main FG channel fails; or
receiving second indication information from a DNI standby node of the SPN system, wherein the second indication information is used to indicate that the DNI standby node is in an intra-domain standby FG channel receiving state.

21. The method according to claim 19, wherein performing, by the PE node, failure detection on the intra-domain main FG channel of the SPN system and the intra-domain standby FG channel of the SPN system comprises:
performing, by the PE node, failure detection by enabling a tandem connection monitoring called TCM OAM function for the intra-domain main FG channel with a DNI master node of the SPN system; and
performing, by the PE node, failure detection by enabling a TCM OAM function for the intra-domain standby FG channel with a DNI standby node of the SPN system.

22. The method according to claim 19, further comprising:
sending, by the PE node, first indication information to the DNI standby node in a case of detecting that the intra-domain main FG channel fails, wherein the first indication information is used to indicate that the PE node is in an intra-domain standby FG channel receiving state.

23. The method according to claim 22, wherein
sending, by the PE node, the first indication information to the DNI standby node comprises:
notifying, by the PE node, APS state information of the PE node to the DNI standby node by means of APS protocols, wherein the APS state information of the PE node comprises the first indication information; and
receiving second indication information from the DNI standby node comprises:
receiving, by the PE node, APS state information of the DNI standby node from the DNI standby node by means of APS protocols, wherein the APS state information of the DNI standby node comprises the second indication information.

24. A protection switching method based on an SPN system, performed by a DNI master node in the SPN system according to any one of claims 1 to 18, wherein the method comprises:
the DNI master node operating in a first state;
performing, by the DNI master node, failure detection on an intra-domain main FG channel, an inter-domain main FG channel and a DNI channel of the SPN system; and
switching the DNI master node to a second state in a case of meeting a second condition, wherein a bridging relationship between sub-ports within the DNI master node in the first state is different from a bridging relationship between sub-ports within the DNI master node in the second state.

25. The method according to claim 24, wherein the second condition comprises:
receiving third indication information from a DNI standby node, wherein the third indication information is used to indicate a first bridging relationship between a first intra-domain FG channel sub-port, a first inter-domain FG channel sub-port, and a first DNI channel sub-port of the DNI master node.

26. The method according to claim 25, wherein prior to receiving the third indication information from the DNI standby node, the method further comprises:
sending detected first failure information to the DNI standby node in a case of detecting that at least one of the intra-domain main FG channel, the inter-domain main FG channel, or the DNI channel fails, wherein the first failure information is used to indicate that at least one of the intra-domain main FG channel, the inter-domain main FG channel, or the DNI channel fails.

27. The method according to claim 25, wherein switching the DNI master node to the second state comprises one of the following:
setting, based on the third indication information, a connection between the first inter-domain FG channel sub-port and the first DNI channel sub-port as a bidirectional bridge, and setting a connection between the first intra-domain FG channel sub-port and the first inter-domain FG channel sub-port as a unidirectional receive-only bridge; or
setting, based on the third indication information, a connection between the first intra-domain FG channel sub-port and the first DNI channel sub-port as a bidirectional connection, and setting a connection between the first inter-domain FG channel sub-port and the first intra-domain FG channel sub-port as a unidirectional receive-only bridge.

28. The method according to any one of claims 24 to 27, wherein
performing, by the DNI master node, failure detection on the intra-domain main FG channel of the SPN system comprises: performing, by the DNI master node, failure detection by enabling a TCM OAM function for the intra-domain main FG channel with a PE node of the SPN system; or
performing, by the DNI master node, failure detection on the inter-domain main FG channel of the SPN system comprises: performing, by the DNI master node, failure detection on the inter-domain main FG channel by performing non-intrusive monitoring on OAM, from a PE node of a peer SPN system, of an end-to-end FG channel; or performing, by the DNI master node, failure detection by enabling a TCM OAM function for the inter-domain main FG channel with a DNI master node of the peer SPN system; or
performing, by the DNI master node, failure detection on the DNI channel of the SPN system comprises: performing, by the DNI master node, failure detection by enabling a TCM OAM function for the DNI channel with the DNI standby node; or performing, by the DNI master node, failure detection on the DNI channel by means of a monitoring capability of an MTN section layer.

29. The method according to any one of claims 24 to 27, wherein in the first state, a connection between the first intra-domain FG channel sub-port and the first inter-domain FG channel sub-port of the DNI master node is set as a bidirectional bridge, and a unidirectional receive-only bridge is established between the first DNI channel sub-port and the first intra-domain FG channel sub-port of the DNI master node.

30. The method according to claim 29, wherein after switching the DNI master node to the second state, the method further comprises:
returning the DNI master node to the first state in a case of meeting a third condition.

31. The method according to claim 30, wherein the third condition comprises: receiving fourth indication information from the DNI standby node, wherein the fourth indication information indicates that the DNI master node returns to the first state.

32. A protection switching method based on an SPN system, performed by a DNI standby node in the SPN system according to any one of claims 1 to 18, wherein the method comprises:
the DNI standby node operating in a third state;
performing, by the DNI standby node, failure detection on an intra-domain standby FG channel, an inter-domain standby FG channel and a DNI channel of the SPN system; and
switching the DNI standby node to a fourth state in a case of meeting a fourth condition, wherein a bridging relationship between sub-ports within the DNI standby node in the third state is different from a bridging relationship between sub-ports within the DNI standby node the fourth state.

33. The method according to claim 32, wherein prior to switching the DNI standby node to the fourth state, the method further comprises:
receiving, by the DNI standby node, first failure information from a DNI master node of the SPN system and/or first indication information from a PE node of the SPN system, wherein the first failure information is used to indicate that at least one of the intra-domain main FG channel, the inter-domain main FG channel, or the DNI channel fails, and the first indication information is used to indicate that the PE node is in a standby state.

34. The method according to claim 33, wherein the fourth condition comprises:
determining, based on detected failure information and received first failure information and/or the first indication information, that at least one of the inter-domain main FG channel, the intra-domain standby FG channel, the inter-domain standby FG channel, or the DNI channel fails.

35. The method according to claim 33, wherein in the case of meeting the fourth condition, the method further comprises:
determining, by the DNI standby node, a first bridging relationship between a first intra-domain FG channel sub-port, a first inter-domain FG channel sub-port, and a first DNI channel sub-port of the DNI master node based on the detected failure information and the received first failure information and/or first indication information; and
sending third indication information to the DNI master node, wherein the third indication information is used to indicate the first bridging relationship.

36. The method according to claim 33, wherein in the case of meeting the fourth condition, the method further comprises:
sending second indication information to the PE node in a case of determining that the inter-domain main FG channel fails or the inter-domain main FG channel and the DNI channel fail simultaneously based on the detected failure information and the first failure information, wherein the second indication information is used to indicate that the DNI standby node is in a standby state.

37. The method according to claim 35, wherein determining, by the DNI standby node, the first bridging relationship between the first intra-domain FG channel sub-port, the first inter-domain FG channel sub-port, and the first DNI channel sub-port of the DNI master node based on the detected failure information and the received first failure information and/or first indication information comprises:
determining, in a case of determining that the intra-domain main FG channel fails, the inter-domain main FG channel is normal in state, the intra-domain standby FG channel is normal in state, and the DNI channel is normal in state based on the detected failure information and the received first failure information and/or first indication information, the first bridging relationship as follows: a connection between the first inter-domain FG channel sub-port and the first DNI channel sub-port being set as a bidirectional connection, and a connection between the first intra-domain FG channel sub-port and the first inter-domain FG channel sub-port being set as a unidirectional receive-only bridge; and
determining, in a case of determining that the intra-domain main FG channel is normal in state, the inter-domain main FG channel fails, the intra-domain standby FG channel is normal in state, and the DNI channel is normal in state based on the detected failure information and the received first failure information and/or first indication information, the first bridging relationship as follows: a connection between the first intra-domain FG channel sub-port and the first DNI channel sub-port being set as a bidirectional connection, and a connection between the first inter-domain FG channel sub-port and the first intra-domain FG channel sub-port being set as a unidirectional receive-only bridge.

38. The method according to claim 34, wherein switching the DNI standby node to the fourth state in the case of meeting the fourth condition comprises:
determining to switch to the fourth state in a case of determining that the intra-domain standby FG channel is normal in state, the inter-domain main FG channel is normal in state, the intra-domain main FG channel fails, and the DNI channel is normal in state based on the detected failure information and the received first failure information and/or first indication information, wherein in the fourth state, a bridging relationship between sub-ports within the DNI standby node is as follows: a connection between a second intra-domain FG channel sub-port and a second DNI channel sub-port being set as a bidirectional connection, and a connection between a second inter-domain FG channel sub-port and the second intra-domain FG channel sub-port being set as a unidirectional receive-only bridge;
determining to switch to the fourth state in a case of determining that the intra-domain standby FG channel is normal in state, the inter-domain main FG channel fails, the intra-domain main FG channel is normal in state, and the DNI channel is normal in state based on the detected failure information and the received first failure information and/or first indication information, wherein in the fourth state, a bridging relationship between sub-ports within the DNI standby node is as follows: a connection between the second inter-domain FG channel sub-port and the second DNI channel sub-port being set as a bidirectional connection, and a connection between the second intra-domain FG channel sub-port and the second inter-domain FG channel sub-port being set as a unidirectional receive-only bridge;
determining to switch to the fourth state in a case of determining that the intra-domain standby FG channel is normal in state, the intra-domain main FG channel fails, the inter-domain main FG channel fails, and the DNI channel is normal in state based on the detected failure information and the received first failure information and/or first indication information, wherein in the fourth state, a bridging relationship between sub-ports within the DNI standby node is as follows: a connection between the second intra-domain FG channel sub-port and the second inter-domain FG channel sub-port being set as a bidirectional connection, and a connection between the second inter-domain FG channel sub-port and the second DNI channel sub-port being set as a unidirectional receive-only bridge;
determining to switch to the fourth state in a case of determining that the intra-domain standby FG channel is normal in state, the inter-domain main FG channel fails, and the DNI channel fails based on the detected failure information and the received first failure information and/or first indication information, wherein in the fourth state, a bridging relationship between sub-ports inside the DNI standby node is as follows: a connection between the second intra-domain FG channel sub-port and the second inter-domain FG channel sub-port being set as a bidirectional connection, and a connection between the second inter-domain FG channel sub-port and the second DNI channel sub-port being set as a unidirectional receive-only connection; or
determining to switch to the fourth state in a case of determining that the intra-domain standby FG channel is normal in state, the inter-domain main FG channel fails, and the DNI channel fails based on the detected failure information and the received first failure information and/or first indication information, wherein in the fourth state, a bridging relationship between sub-ports inside the DNI standby node is as follows: a connection between the second intra-domain FG channel sub-port and the second inter-domain FG channel sub-port being set as a bidirectional connection, and a connection between the second inter-domain FG channel sub-port and the second DNI channel sub-port being set as a unidirectional receive-only connection.

39. The method according to any one of claims 32 to 38, wherein
performing, by the DNI standby node, failure detection on the intra-domain standby FG channel of the SPN system comprises: performing, by the DNI standby node, failure detection by enabling a TCM OAM function for the intra-domain standby FG channel with a PE node of the SPN system; or
performing, by the DNI standby node, failure detection on the inter-domain main FG channel of the SPN system comprises: performing, by the DNI standby node, failure detection on the inter-domain standby FG channel by performing non-intrusive monitoring on OAM, from a PE node of a peer SPN system, of an end-to-end FG channel; or performing, by the DNI standby node, failure detection by enabling a TCM OAM function for the inter-domain standby FG channel with a DNI standby node of the peer SPN system; and
performing, by the DNI standby node, failure detection on the DNI channel of the SPN system comprises: performing, by the DNI standby node, failure detection by enabling a TCM OAM function for the DNI channel with the DNI master node; or performing, by the DNI standby node, failure detection on the DNI channel by means of a monitoring capability of an MTN section layer.

40. The method according to any one of claims 32 to 38, wherein in the third state, the second intra-domain FG channel sub-port and the second inter-domain FG channel sub-port of the DNI standby node establish a bidirectional bridge, and the second DNI channel sub-port and the second intra-domain FG channel sub-port establish a unidirectional receive-only bridge; or
the second inter-domain FG channel sub-port and the second DNI channel sub-port of the DNI standby node establish a bidirectional bridge, and the second intra-domain FG channel sub-port and the second inter-domain FG channel sub-port establish a unidirectional receive-only bridge.

41. The method according to claim 40, wherein after switching the DNI standby node to the fourth state, the method further comprises:
restoring to the third state in a case of determining failure recovery based on the detected failure information and the received first failure information and/or first indication information.

42. An electronic device, comprising a processor and a memory, wherein the memory stores a program or instruction able to run on the processor, and the program or the instruction, when executed by the processor, implements the steps of the protection switching method based on the SPN system according to any one of claims 19 to 41.

43. A readable storage medium, having a program or instruction stored thereon, wherein the program or the instruction, when executed by a processor, implements the steps of the protection switching method based on the SPN system according to any one of claims 19 to 41.
